# EUROPÄISCHE PATENTSCHRIFT

(11) **EP 1 497 381 B1**
(45) Veröffentlichungstag und Bekanntmachung des Hinweises auf die Patenterteilung: **04.04.2007**
(21) Anmeldenummer: 03745794.2
(22) Anmeldetag: 08.04.2003
(51) Int. Cl.: C09D 5/04, C09D 123/08, C09D 133/06

(54) **THIXOTROPIERMITTEL, ENTHALTEND ETHYLENTERPOLYMERWACHSE**
THIXOTROPIC AGENTS CONTAINING ETHYLENE TERPOLYMER WAXES
AGENTS THIXOTROPES CONTENANT DES CIRES SOUS FORME DE TERPOLYMERES D'ETHYLENE

(30) Priorität: 10.04.2002 DE 10215813
(43) Veröffentlichungstag der Anmeldung: 19.01.2005
(73) Patentinhaber: BASF Aktiengesellschaft, 67056 Ludwigshafen (DE)
(72) Erfinder: FECHTENKÖTTER, Andreas, 67063 Ludwigshafen (DE); WITTKOWSKI, Lars, 68167 Mannheim (DE); ZEITZ, Katrin, 68239 Mannheim (DE); EHLE, Michael, 67071 Ludwigshafen (DE); GAST, Siegfried, 67071 Ludwigshafen (DE); KASEL, Wolfgang, 69226 Nussloch (DE); DECKERS, Andreas, 55234 Flomborn (DE)
(86) Internationale Anmeldenummer: PCT/EP2003/003613
(87) Internationale Veröffentlichungsnummer: WO 2003/085054

(56) Entgegenhaltungen:
- DE-A- 3 446 781
- US-A- 3 215 678
- US-A- 4 200 561
- US-A- 4 296 019
- US-A- 4 365 029
- US-A- 4 875 964
- US-A- 5 374 687

## Beschreibung

Die vorliegende Erfindung betrifft zur Herstellung von Thixotropiermitteln, enthaltend
0,1 bis 30 Gew.-% mindestens eines Ethylenterpolymerwachses,
   das aufgebaut ist aus
   80 bis 99,9 Gew.-% Ethylen,
   0,1 bis 20 Gew.-% mindestens zweier Comonomere, von denen
   als erstes Comonomer 1 bis 99 Gew.-% mindestens einer C₃-C₁₂-Alken-carbonsäure und
   als zweites Comonomer 99 bis 1 Gew.-% mindestens eines Esters der allgemeinen Formel I 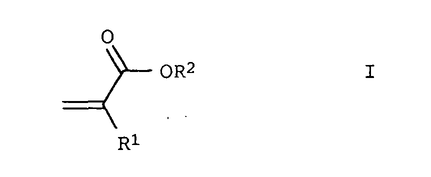 wobei R¹ gewählt wird aus Wasserstoff, C₁-C₁₀-Alkyl, C₃-C₁₂-Cycloalkyl oder C₆-C₁₄-Aryl
      und R² gewählt wird aus C₁-C₁₀-Alkyl, C₃-C₁₂-Cycloalkyl oder C₆-C₁₄-Aryl,
5 bis 70 Gew.-% mindestens eines Lösemittels, das mit dem Ethylenterpolymerwachs unverträglich ist, und
5 bis 85 Gew.-% mindestens eines Lösemittels, das mit dem Ethylenterpolymerwachs und mit dem oder den erstgenannten Lösemitteln verträglich ist.

Thixotropiermittel sind als wichtige Komponente von Lacken, insbesondere Metalliclacken, von entscheidender Bedeutung für ihr Anwendungsprofil. Derartige Thixotropiermittel enthalten in der Regel mindestens eine polymere Komponente. Thixotropiermittel haben die Aufgabe, beispielsweise die Alterungsbeständigkeit und die Temperaturbeständigkeit der Lacke zu erhöhen. Weiterhin sollen sie die Applikation der betreffenden Lacke erleichtern, also die Viskosität unter der Einwirkung von Scherkräften herabsetzen, andererseits sollen sie die unerwünschte Tendenz zur Bildung von Tropfen nach der Applikation der Lacke herabsetzen - dazu sollen sie die Viskosität der Lacksysteme in Abwesenheit von Scherkräften erhöhen. Man ist also an möglichst effizienten Thixotropiermitteln interessiert.

Außerdem ist es wünschenswert, Thixotropiermittel auf Basis wirtschaftlich möglichst günstiger Ausgangsmaterialien herzustellen. Besonders günstige Ausgangsmaterialien sind Polyethylenwachse.

Insbesondere werden Thixotropiermittel in fein dispergierter Form für Zweischicht-Metallic-Autolacke eingesetzt. Thixotropiermittel sollen hierbei als Antiabsetzmittel im Vorlegelack wirken ("base coat"). Dabei wird die Absetzgeschwindigkeit der Pigmentplättchen des Metalleffektpigments beim Trocknen des Lackfilms so verringert, dass diese genügend Zeit haben, sich in einer Ebene zu orientieren. Hierdurch entsteht ein höherer Glanz und das typische "Metallic"-Aussehen nach der durch den Klarlack ("top coat" vervollständigten Autolackierung.

Aus US 4,200,561 sind stabile thixotrope Gele bekannt, die in der organischen Phase zwischen 5 und 60 Gew.-% eines Geliermittels, zwischen 5 und 50 Gew.-% eines bei Zimmertemperatur mit dem Geliermittel unverträglichen Lösemittels und aus 20 bis 90 Gew.-% eines mit dem Geliermittel und dem Lösemittel verträglichen Lösemittels besteht. Das Geliermittel besteht dabei zu mindestens 25 Gew.-% aus Polyethylenwachsen, die ihrerseits zu 40 bis 96 mol-% Ethylen und zwischen 4 und 60 mol-% eines Comonomeren, gewählt aus Acrylsäure, Methacrylsäure, Ethacrylsäure, veresterter Acrylsäure, Vinylacetat, Vinylformiat, Vinylpropionat oder Mischungen derselben haben. Man beobachtet jedoch, dass bei längerer Lagerung Wachspartikel auskristallisieren können und die Feinteiligkeit der Pasten noch zu verbessern ist. Daher sind sie insbesondere für Metalliclacke mit heutigem Anforderungsprofil nicht ausreichend stabil.

Aus DE 31 09 950 sind Hartwachse aus Terpolymerisaten des Ethylens mit ungesättigten Carbonsäuren und ungesättigten Carbonsäureestern bekannt sowie ihre Verwendung im Pflegemittelbereich, insbesondere als Komponente in Bodenpflegemitteln zusammen mit Styrol-Acrylsäure-Acrylat-Dispersionen. Als weitere Anwendungen werden die Textilchemie und die Kunststoffverarbeitung vorgeschlagen.

Es bestand die Aufgabe,
- verbesserte Thixotropiermittel bereit zu stellen,
- ein Verfahren zur Herstellung von verbesserten Thixotropiermitteln bereit zu stellen, und
- Anwendungen für die verbesserten Thixotropiermittel bereit zu stellen.

Demgemäß wurden die eingangs definierten Thixotropiermittel gefunden.

Die erfindungsgemäßen Thixotropiermittel enthalten
0,1 bis 30 Gew.-%, bevorzugt 0,5 bis 15 Gew.-%, besonders bevorzugt mindestens 1 bis 10 Gew.-% mindestens eines Ethylenterpolymerwachses,
   das aufgebaut ist aus
   80 bis 99,9 Gew.-% Ethylen,
   0,1 bis 20 Gew.-% mindestens zweier Comonomere, von denen
   als erstes Comonomer 1 bis 99 Gew.-% mindestens einer C₃-C₁₂-Alken-carbonsäure und
   als zweites Comonomer 99 bis 1 Gew.-% mindestens eines Esters der allgemeinen Formel I 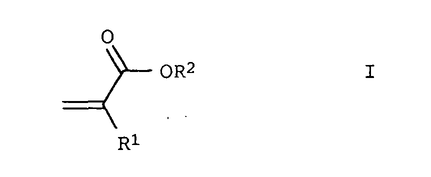 wobei R¹ gewählt wird aus Wasserstoff, C₁-C₁₀-Alkyl, C₃-C₁₂-Cycloalkyl oder C₆-C₁₄-Aryl
      und R² gewählt wird aus C₁-C₁₀-Alkyl, C₃-C₁₂-Cycloalkyl oder C₆-C₁₄-Aryl,
5 bis 70 Gew.-%, bevorzugt 8 bis 50 Gew.-%, besonders bevorzugt 10 bis 20 Gew.-% mindestens eines Lösemittels, das mit dem Ethylenterpolymerwachs unverträglich ist, und
5 bis 85 Gew.-%, bevorzugt 10 bis 80 Gew.-%, besonders bevorzugt 30 bis 60 Gew.-% mindestens eines Lösemittels, das mit dem Ethylenterpolymerwachs und mit dem bzw. den erstgenannten Lösemitteln verträglich ist.

Die in den erfindungsgemäßen Thixotropiermitteln eingesetzten Ethylenterpolymerwachse sind wachsartige Terpolymerisate aus Ethylen und mindestens 2 Comonomeren, wobei die Wachse üblicherweise eine Schmelzviskosität im Bereich von 20 bis 70.000 mm²/s und bevorzugt von 800 bis 2.000 mm²/s, gemessen bei 120°C nach DIN 51562 aufweisen. Ihre Säurezahl beträgt 1 bis 110, bevorzugt 10 bis 110 mg KOH/g Wachs, bestimmt nach DIN 53402; insbesondere von 30 bis 50 mg KOH/g Wachs. Die Schmelzpunkte liegen im Bereich von 60 bis 110°C, bevorzugt im Bereich von 80 bis 109°C, bestimmt durch DSC nach DIN 51007. Die Dichte beträgt üblicherweise 0,89 bis 0,99 g/cm³, bevorzugt bis 0,96 g/cm³, bestimmt nach DIN 53479.

Die in den erfindungsgemäßen Thixotropiermitteln eingesetzten Ethylenterpolymerwachse setzen sich zusammen aus
80 bis 99,9 Gew.-%, bevorzugt 93 bis 99,5 Gew.-% Ethylen,
0,1 bis 20 Gew.-%, bevorzugt 0,5 bis 7 Gew.-% mindestens zweier Comonomere, davon
als erstes Comonomer 1 bis 99 Gew.-%, bevorzugt 30 bis 70 Gew.-% und besonders bevorzugt 40 bis 60 Gew.-% mindestens einer C₃-C₁₂-Alken-carbonsäure und
als zweites Comonomer 99 bis 1 Gew.-%, bevorzugt 70 bis 30 und besonders bevorzugt 60 bis 40 Gew.-% mindestens eines Esters der allgemeinen Formel I.

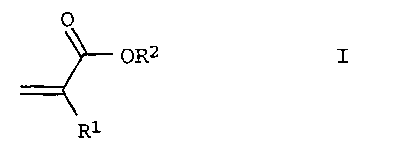

Dabei wird in Formel I die Variable R¹ gewählt aus
- Wasserstoff,
- C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
und R² wird gewählt aus
- C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Ganz besonders bevorzugt ist R¹ gewählt aus Wasserstoff oder Methyl, und R² ist ganz besonders bevorzugt Methyl.

Unter C₃-C₁₂-Alken-carbonsäure sind ungesättigte Carbonsäuren zu verstehen, die unter den Bedingungen der radikalischen Polymerisation Copolymere und/oder Terpolymere mit ethylen bilden. Sie haben vorzugsweise eine C-C-Doppelbindung in Konjugation zur Carboxylgruppe, d.h. es handelt sich bei ihnen um α,β-ungesättigte Carbonsäuren. Beispielhaft sind zu nennen: Acrylsäure, (E)-Crotonsäure, (Z)-Crotonsäure und Gemische der beiden vorgenannten, Methacrylsäure, Ethacrylsäure, (E)-1-Butenyl-säure, (E)-1-Pentenyl-säure, (E)-1-Heptenyl-säure, (E)-1-Undecenyl-säure. Bevorzugt sind Acrylsäure und Methacrylsäure. Ganz besonders bevorzugt ist Acrylsäure.

Die erfindungsgemäßen Thixotropiermittel können auch solche Ethylenterpolymerwachse enthalten, die beispielsweise durch Copolymerisation von Ethylen, einer Verbindung der allgemeinen Formel I und zwei C₃-C₁₂-Alken-carbonsäuren hergestellt werden. Gleichfalls eigenen sich solche Polyethylenwachse zur Verwendung als Thixotropiermittel, die durch Copolymerisation von Ethylen, einer C₃-C₁₂-Alken-carbonsäure und zwei Verbindungen der allgemeinen Formel I erhältlich sind.

In einer weiteren Ausführungsform der vorliegenden Erfindung enthalten die in den erfindungsgemäßen Thixotropiermitteln enthaltenen Ethylenterpolymerwachse neben Ethylen, einer C₃-C₁₂-Alken-carbonsäure und einer Verbindung der allgemeinen Formel I noch bis zu 10 Gew.-%, bezogen auf die Summe der vorgenannten Comonomere, eines vierten Comonomers, beispielsweise Vinylacetat oder Vinylformiat.

Die in den erfindungsgemäßen Thixotropiermitteln enthaltenen Ethylenterpolymerwachse sind an sich bekannt und werden nach an sich bekannten Verfahren hergestellt, vorzugsweise nach dem aus dem Stand der Technik (vgl. beispielsweise: *Ullmann's Encyclopedia of Industrial Chemistry* 5. Auflage, Stichwort: Waxes, Bd.A 28, S. 146 ff., VCH Weinheim, Basel, Cambridge, New York, Tokio, 1996 bekannten Verfahren zur direkten radikalischen Copolymerisation von Ethylen mit Acrylsäure oder Acrylsäureestern.

Die Herstellung der Ethylenterpolymerwachse kann in gerührten Hochdruckautoklaven oder in Hochdruckrohrreaktoren erfolgen. Die Herstellung in gerührten Hochdruckautoklaven ist bevorzugt. Die für die Verfahren der in den erfindungsgemäßen Thixotropiermitteln enthaltenen Polyethylenwachse angewandten gerührten Hochdruckautoklaven sind bekannt, eine Beschreibung findet man in *Ullmann's Encyclopedia of Industrial Chemistry* 5. Auflage, Stichworte: Waxes, Bd.A 28, S. 146 ff., VCH Weinheim, Basel, Cambridge, New York, Tokio, 1996. Bei ihnen verhält sich überwiegend das Verhältnis Länge/Durchmesser in Bereichen von 5:1 bis 30:1, bevorzugt 10:1 bis 20:1. Die gleichfalls anwendbaren Hochdruckrohrreaktoren findet man ebenfalls in *Ullmann's Encyclopedia of Industrial Chemistry* 5. Auflage, Stichworte: Wachse, Bd.A 28, S. 146 ff., VCH Weinheim, Basel, Cambridge, New York, Tokio, 1996.

Geeignete Druckbdingungen für die Polymerisation sind 1000 bis 3500 bar, bevorzugt 1500 bis 2500 bar. Die Reaktionstemperaturen liegen im Bereich von 160 bis 320°C, bevorzugt im Bereich von 200 bis 280°C.

Als Regler verwendet man beispielsweise einen aliphatischen Aldehyd oder ein aliphatisches Keton der allgemeinen Formel II 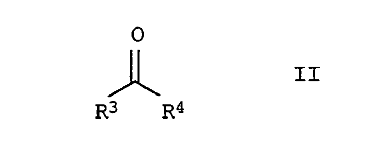 oder Mischungen derselben.

Dabei sind die Reste R³ und R⁴ gleich oder verschieden und ausgewählt aus
- Wasserstoff;
- C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

In einer besonderen Ausführungsform sind die Reste R³ und R⁴ miteinander unter Bildung eines 4- bis 13-gliedrigen Rings kovalent verbunden. So können R³ und R⁴ beispielsweise gemeinsam sein: -(CH₂)₄-, -(CH₂)₅-, -(CH₂)₆, -(CH₂)₇-, -CH(CH₃)-CH₂-CH₂-CH(CH₃)- oder -CH (CH₃) -CH₂-CH₂-CH₂-CH(CH₃)-.

Die Verwendung von Propionaldehyd (R³ = H, R⁴ = C₂H₅) oder Ethylmethylketon (R³ = CH₃, R⁴ = C₂H₅) als Regler ist ganz besonders bevorzugt.

Weitere gut geeignete Regler sind unverzweigte aliphatische Kohlenwasserstoffe wie beispielsweise Propan geeignet. Besonders gute Regler sind verzweigte aliphatische Kohlenwasserstoffe mit tertiären H-Atomen, beispielsweise Isobutan, Isopentan, Isooctan oder Isododekan (2,2,4,6,6-Pentamethylheptan). Ganz besonders geeignet ist Isododekan. Als weitere zusätzliche Regler können höhere Olefine wie beispielsweise Propylen eingesetzt werden.

Die Menge an verwendetem Regler entspricht den für das Hochdruckpolymerisationsverfahren üblichen Mengen.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Als Radikalstarter verwendet man ein oder mehrere Peroxide, ausgewählt aus den kommerziell erhältlichen Substanzen
- Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.Butylperoxydiethylacetat, tert.Butylperoxydiethylisobutyrat, 1,4-Di(tert.-butylperohycarbo)-cyclohexan als Isomerengemisch, tert.-Butylperisononanoat, 1,1-Di-(tert.-butylperoxy)-3,3,5-trimethylcyclohexan, 1,1-Di-(tert.-butylperohy)-cyclohexan, Methyl-isobutylketonperoxid, tert.-Butylperoxyisopropylcarbonat, 2,2-Di-tert.-butylperoxy) butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylmonohydroperoxid, Cumolhydroperoxid oder tert.-Butylhydroperoxid; oder
- dimere oder trimere Ketonperoxide der allgemeinen Formel III a bis III c.

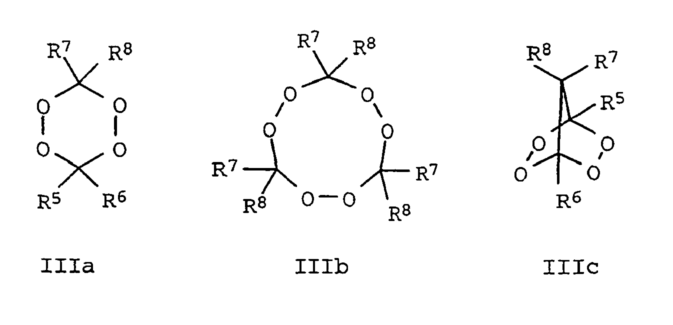

Dabei sind die Reste R⁵ bis R⁸ gleich oder verschieden und ausgewählt aus
- C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, n-Heptyl, n-Octyl; bevorzugt lineares C₁-C₆-Alkyl wie Methyl, Ethyl, n-Propyl, n-Butyl, n-Pentyl, n-Hexyl, besonders bevorzugt lineares C₁-C₄-Alkyl wie Methyl, Ethyl, n-Propyl oder n-Butyl, ganz besonders bevorzugt ist Ethyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Peroxide der allgemeinen Formeln III a bis III c sowie Verfahren zu ihrer Herstellung sind aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

Die erfindungsgemäßen Thixotropiermittel enthalten weiterhin 5 bis 70 Gew.-%, bevorzugt 8 bis 50 Gew.-%, besonders bevorzugt 10 bis 20 Gew.-% mindestens eines Lösemittels, das mit dem Ethylenterpolymerwachs unverträglich ist. Unter mit dem Ethylenterpolymerwachs unverträglichen Lösemitteln im Sinne der vorliegenden Erfindung sind solche Lösemittel zu verstehen, die das betreffende Ethylenterpolymerwachs nicht oder nur in sehr geringen Anteilen, das heißt zu 1 Gew.-% oder weniger, bei Temperaturen bis zum Siedepunkt des jeweiligen Lösemittels zu lösen vermögen. Es handelt sich dabei in der Regel um polare Lösemittel, beispielsweise um Ether, Ester, Ketone, Alkohole, insbesondere um Ether wie Di-iso-Propylether, Di-n-Butylether, weiterhin um Ester wie Ethylacetat, n-Propylacetat, n-Butylacetat, n-Hexylacetat, Ethylpropionat, Ethylbutyrat; weiterhin um Ketone wie beispielsweise Methylethylketon, Diethylketon, Methylisobutylketon; weiterhin um Alkohole wie beispielsweise n-Butanol.

Weiterhin enthalten die erfindungsgemäßen Thixotropiermittel 5 bis 85 Gew.-%, bevorzugt 10 bis 80 Gew.-%, besonders bevorzugt 30 bis 60 Gew.-%mindestens eines Lösemittels, das mit dem Ethylenterpolymerwachs und mit dem oder den erstgenannten Lösemitteln verträglich ist. Unter mit dem Ethylenterpolymerwachs und mit dem ersten Lösemittel verträglichen Lösemitteln im Sinne der vorliegenden Erfindung sind solche Lösemittel zu verstehen, die das jeweilige Ethylenterpolymerwachs bei Temperaturen bis zum Siede punkt, bevorzugt bei Temperaturen mindestens 10°C unterhalb des Siedepunkts des jeweiligen Lösemittels in nicht nur geringen Anteilen zu lösen vermögen, d.h. klare beispielsweise mindestens 5 bis 6 Gew.-%, bevorzugt 20 bis 30 Gew.-% Lösungen bilden. Außerdem müssen sie mit dem ersten Lösemittel als solchem in jedem Verhältnis ohne Phasentrennung mischbar sein. Zu nennen sind aromatische oder aliphatische Kohlenwasserstoffe, vorzugsweise solche mit 7 bis 11 C-Atomen, in reiner Form oder als Gemische; beispielsweise Toluol, Ethylbenzol, ortho-Xyol, meta-Xylol oder para-Xylol; weiterhin n-Heptan, n-Octan, iso-Octan, n-Dekan, Decalin; bevorzugt sind Toluol, Ethylbenzol, ortho-Xyol, meta-Xylol oder para-Xylol; weiterhin n-Hexan, Cyclohexan, n-Heptan, n-Octan, iso-Octan, n-Dekan sowie Mischungen wie beispielsweise Aliphatengemische, die unter dem Namen Petrolether bekannt sind, oder Mischungen aus aliphatischen und aromatischen Kohlenwasserstoffen mit 7 bis 11 C-Atomen, die beispielsweise unter dem Namen Solventnaphtha der BASF Aktiengesellschaft bekannt sind.

Die erfindungsgemäßen Thixotropiermittel zeigen sehr gute thixotrope Eigenschaften und ein insgesamt den aus dem Stand der Technik bekannten Thixotropiermitteln überlegenes Anwendungsprofil.

Ein weiterer Aspekt der vorliegenden Erfindung ist ein Verfahren zur Herstellung der erfindungsgemäßen Thixotropiermittel. Zur Herstellung der erfindungsgemäßen Thixotropiermittel vermischt man miteinander die Komponenten Ethylenterpolymerwachs, mindestens ein Lösemittel, das mit dem Ethylenterpolymerwachs unverträglich ist, und mindestens ein Lösemittel, das mit dem Ethylenterpolymerwachs und mit dem oder den erstgenannten Lösemitteln verträglich ist. Vorzugsweise geht man so vor, dass man zunächst das Ethylenterpolymerwachs in einem oder mehreren mit dem Ethylenterpolymerwachs verträglichen Lösemitteln löst, beispielsweise bei erhöhter Temperatur, bis man eine klare Lösung erhält. Der Lösevorgang lässt sich beispielsweise durch Rühren oder Schütteln beschleunigen. Anschließend gibt man mindestens ein mit dem Ethylenterpolymerwachs unverträgliches Lösemittel zu. Dabei ist es zweckmäßig, die Zugabe des oder der unverträglichen Lösemittel über einen kurzen Zeitraum durchzuführen.

Ein weiterer Aspekt der vorliegenden Erfindung ist die Verwendung der erfindungsgemäßen Thixotropiermittel. Die erfindungsgemäßen Thixotropiermittel eigenen sich ausgezeichnet als Komponente von Lacken, insbesondere von Metalliclacken. Metalliclacke, in der Patentliteratur auch als Metalleffektlackierungen bezeichnet, und prinzipiell geeignete Zusammensetzungen sind beispielsweise in WO 87/05923 beschrieben. Die Verwendung der erfindungsgemäßen Thixotropiermittel als Komponente von Metalliclacken sowie Metalliclacke, enthaltend die erfindungsgemäßen Thixotropiermittel, sind eine weitere Ausführungsform der vorliegenden Erfindung. Schließlich sind ein Verfahren zur Herstellung von Lacken, insbesondere Metalliclacken durch Vermischen der erfindungsgemäßen Thixotropiermittel mit Pigmenten, beispielsweise Aluminiumpartikeln, Glimmer, Metallbronzen oder Kupfer eine weiterer Aspekt der vorliegenden Erfindung.

Es wurde nun überraschend gefunden, dass sich die erfindungsgemäßen Thixotropiermittel ausgezeichnet als Komponente in Metalliclacken eignen, weil sie die Thixotropie der Metalliclacke erhöhen. Hoch thixotrope Metalliclacke sind den herkömmlichen Metalliclacken überlegen, weil sich in den gelagerten Proben die Pigmente, insbesondere die in Metalliclacken enthaltenen Aluminiumpartikel nicht absetzen, was zu einer unerwünschten Entmischung führen würde. Andererseits lassen sich die erfindungsgemäßen Lacke sehr gut auf Oberflächen auftragen. Ein weiterer Aspekt der vorliegenden Erfindung sind daher Oberflächen, beschichtet mit den erfindungsgemäßen Lacken und insbesondere Metalliclacken, enthaltend die erfindungsgemäßen Thixotropiermittel, sowie ein Verfahren zur Beschichtung von Oberflächen, insbesondere aus Metall mit den erfindungsgemäßen Metalliclacken, beispielsweise Karosserieoberflächen, Gehäuse und Geräte. Die erfindungsgemäß beschichteten Oberflächen und zeigen ausgezeichnete Eigenschaften, was beispielsweise Kratzfestigkeit betrifft. Außerdem sind die erfindungsgemäß beschichteten Oberflächen ausgezeichnet mattiert.

### Arbeitsbeispiele

Alle Volumenangaben beziehen sich auf Raumtemperatur und 1 bar, wenn nicht anders angegeben.

### 1. Herstellung der Ethylenterpolymerwachse

Ethylen, Acrylsäure und Methylacrylat wurden in einem Hochdruckautoklaven, wie er in der Literatur beschrieben wird (M. Buback *et al*., *Chem. Ing. Tech.* **1994**, *66*, 510), polymerisiert. Hierzu wurden Ethylen und das Comonomerengemisch aus Acrylsäure und Methylacrylat, dem ca. 1000 bis 1500 ml·h⁻¹ einer Initiatorlösung, bestehend aus tert.-Butylperoxypivalat (0,02 mol·l⁻¹) gelöst in Isododekan zugesetzt wurde, unter dem Reaktionsdruck von 1700 bar eingespeist. Als Regler wurden 600 ml/h einer Mischung aus Propionaldehyd und Isododekan (Volumenverhältnis 1:1) zudosiert. In Tabelle 1 sind die Polymerisationsbedingungen und in der Tabelle 2 die analytischen Daten der erhaltenen Polymerisate zusammengestellt.

Der Gehalt an Ethylen, Acrylsäure und Methylacrylat in den Ethylenterpolymerwachsen wurde NMR-spektroskopisch bzw. durch Titration (Säurezahl) bestimmt. Die Säurezahl der Polymerisate wurde titrimetrisch nach DIN 53402 bestimmt. Der KOH-Verbrauch entspricht dem Acrylsäure-Gehalt im Polymerisat.

**Tabelle 1**

| Herstellung der Ethylenterpolymerwachse | | | | | | | |
|---|---|---|---|---|---|---|---|
| Nr. | *T*_{Reaktor,max} | Monomerzulauf | | Davon [jeweils g h⁻¹] | | | Polymer |
| | [°C] | Ethylen | Comonomer + ID | Acrylsäure | Methylacrylat | Isododekan | [g h⁻¹] |
| | | [g h-¹] | [ml·h⁻¹] | | | | |
| 1 | 222 | 10000 | 990 | 43,0 | 43,0 | 689 | 2000 |
| 2 | 220 | 10000 | 1450 | 63,0 | 63,0 | 1009 | 2100 |
| 3 | 221 | 10000 | 1800 | 78,3 | 78,3 | 1252 | 2100 |
| 4 | 220 | 10000 | 2200 | 95,7 | 95,7 | 1530 | 2300 |
| 5 | 222 | 10000 | 960 | 44,7 | 89,3 | 625 | 2000 |
| 6 | 220 | 10000 | 1400 | 65,1 | 130,1 | 912 | 2000 |
| 7 | 221 | 10000 | 1870 | 87,0 | 174,0 | 1218 | 2100 |
| 8 | 220 | 10000 | 2180 | 101,4 | 202,8 | 1420 | 2200 |
| 9 | 221 | 10000 | 970 | 44,5 | 133,5 | 601 | 2100 |
| 10 | 220 | 10000 | 1400 | 64,2 | 192,7 | 867 | 2100 |
| 11 | 220 | 10000 | 1800 | 82,6 | 247,7 | 1115 | 2300 |
| 12 | 221 | 10000 | 2400 | 110,1 | 330,3 | 1486 | 2500 |
| 13 | 221 | 10000 | 1080 | 53,0 | 207,3 | 617 | 2500 |
| 14 | 219 | 10000 | 1500 | 73,7 | 288,0 | 857 | 2300 |
| 15 | 220 | 10000 | 1920 | 94,3 | 368,6 | 1097 | 2300 |
| 16 | 220 | 10000 | 2440 | 119,8 | 468,4 | 1394 | 2700 |
| 17 | 220 | 10000 | 1470 | 67 | 202,2 | 910,1 | 2200 |
| 18 | 220 | 10000 | 1550 | 68 | 68 | 1080 | 2100 |

| | | | | | | | |
|---|---|---|---|---|---|---|---|
| Verwendete Abkürzungen: ID = Isododekan. | | | | | | | |

Die analytischen Daten der Ethylenterpolymerwachse finden sich in Tabelle 2. Außerdem finden sich in Tabelle 2 die Daten von Vergleichsprobe V1; V1 wurde analog zu Wachs 6 hergestellt, jedoch ohne Verwendung von Methylacrylat und unter Einsatz von 5,5 Gew.-% Acrylsäure im Zulauf. Der Acrylat-Gehalt des Ethylenterpolymerwachses V1 beträgt 5,5 Gew.-%.

**Tabelle 2: Analytische Daten der Ethylenterpolymerwachse**

| Nr. | Zusammensetzung NMR/titrimetrisch | | | Säurezahl [mg KOH | 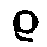 (23°C) | η 120°C | Schmp. |
|---|---|---|---|---|---|---|---|
| | Ethylen [Gew.-%] | Acrylsäure | Methylacrylat | | [g cm⁻³] | [mm² s⁻¹] | [°C] |
| | | [Gew.-%] | [Gew.-%] | g⁻¹] | | | |
| 1 | 96,8 | 1,7 | 1,5 | 13,1 | 0,927 | 1000 | 104,6 |
| 2 | 96,1 | 2,1 | 1,8 | 16,7 | 0,920 | 1140 | 103,1 |
| 3 | 94,4 | 2,7 | 2,9 | 20,9 | 0,928 | 1080 | 101,3 |
| 4 | 92,9 | 3,5 | 3,5 | 27,4 | 0,928 | 1020 | 98,7 |
| 5 | 95,0 | 1,8 | 3,3 | 13,9 | 0,931 | 1080 | 102,7 |
| 6 | 92,9 | 2,4 | 4,7 | 18,7 | 0,920 | 1070 | 100,0 |
| 7 | 90,4 | 3,1 | 6,5 | 24,4 | 0,930 | 1040 | 95,8 |
| 8 | 89,5 | 3,7 | 6,8 | 29,1 | 0,931 | 1070 | 92,8 |
| 9 | 92,6 | 1,7 | 5,7 | 13,1 | 0,930 | 900 | 100,4 |
| 10 | 92,2 | 2,3 | 5,5 | 18,0 | 0,929 | 1080 | 97,0 |
| 11 | 89,8 | 2,8 | 7,4 | 21,8 | 0,931 | 1020 | 93,5 |
| 12 | 86,3 | 3,4 | 10,2 | 26,8 | 0,933 | 1030 | 89,6 |
| 13 | 91,9 | 1,8 | 6,3 | 14,3 | 0,932 | 910 | 97,4 |
| 14 | 89,0 | 2,4 | 8,6 | 18,8 | 0,933 | 920 | 93,4 |
| 15 | 85,8 | 3,0 | 11,2 | 23,4 | 0,931 | 880 | 88,4 |
| 16 | 83,4 | 3,6 | 13,0 | 28,2 | 0,934 | 1020 | 84,6 |
| 17 | 91,4 | 6,4 | 2,2 | 21,2 | 0,940 | 1660 | 99,2 |
| 18 | 95,3 | 2,0 | 2,7 | 15,3 | 0,941 | 1770 | 105,7 |
| V1 | 95,5 | 4,5 | - | 43,0 | 0,930 | 1500 | 101,0 |

Die Schmelzviskosität wurde mit Hilfe von DSC nach DIN 51562 bestimmt, die Schmelzpunkte nach DIN 51007.
2. Herstellung der erfindungsgemäßen Thixotropiermittel und Prüfung auf Thixotropie

Die anwendungstechnische Prüfung erfolgte ohne Zugabe eines Pigments.

In einem Rundkolben mit Tropftrichter wurden 12 g Ethylenterpolymerwachs nach Tabelle 2 mit 82 g Solventnaphtha (BASF Aktiengesellschaft) unter Rühren auf 105°C erhitzt, bis sich eine klare Lösung gebildet hatte. Anschließend wurde die Lösung unter Rühren auf 80°C abgekühlt und über den Tropftrichter 106 g n-Butylacetat (Raumtemperatur) hinzugegeben. Es bildete sich ein dispergierter Niederschlag. Schließlich wurde unter Rühren auf 32°C abgekühlt.

Nach mindestens 24 Stunden Lagerung bei Raumtemperatur wurden die Dispersionen kurz aufgeschüttelt und nochmals 45 Minuten stehen gelassen. Danach wurden 0,5 g der Wachsdispersion auf eine waagerecht liegende Glasplatte gegeben. Nach einer Verweilzeit von einer Minute wurde die Glasplatte senkrecht aufgestellt. Als Maß für die Thixotropie galt die Strecke (Messbereich 0-40 cm), die von der aufgetragenen Wachsdispersion innerhalb von 2 Minuten zurückgelegt wurde. Wurde innerhalb von 2 Minuten der Messbereich überschritten, so wurde die hierfür benötigte Zeit gemessen. Die Ergebnisse sind in Tabelle 3 zusammengefasst.

**Tabelle 3. Anwendungstechnische Prüfergebnisse**

| Wachs | Ablaufstrecke | | Glanz bei 60° | Bemerkungen |
|---|---|---|---|---|
| | Zeit [s] | Strecke [cm] | | |
| V1 | 120 | 7 | 75 | Viele große Stippen |
| 17 | 120 | 24 | 48 | Kaum Stippen |
| 18 | 120 | 10 | 17 | Sehr wenig kleine Stippen |

## Patentansprüche

1. Thixotropiermittel, enthaltend als Komponenten
0,1 bis 30 Gew.-% mindestens eines Ethylenterpolymerwachses, das aufgebaut ist aus
80 bis 99,9 Gew.-% Ethylen,
0,1 bis 20 Gew.-% mindestens zweier Comonomere, von denen
als erstes Comonomer 1 bis 99 Gew.-% mindestens einer C₃-C₁₂-Alken-carbonsäure und
als zweites Comonomer 99 bis 1 Gew.-% mindestens eines Esters der allgemeinen Formel I 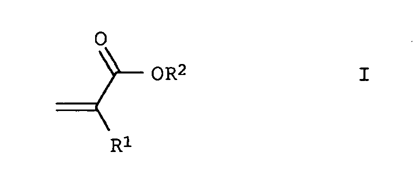 wobei R¹ gewählt wird aus Wasserstoff, C₁-C₁₀-Alkyl, C₃-C₁₂-Cycloalkyl oder C₆-C₁₄-Aryl
und R² gewählt wird aus C₁-C₁₀-Alkyl, C₃-C₁₂-Cycloalkyl oder C₆-C₁₄-Aryl,
5 bis 70 Gew.-% mindestens eines Lösemittels, das mit dem Ethylenterpolymerwachs unverträglich ist, und
5 bis 85 Gew.-% mindestens eines Lösemittels, das mit dem Ethylenterpolymerwachs und mit dem oder den erstgenannten Lösemitteln verträglich ist.

2. Thixotropiermittel nach Anspruch 1, **dadurch gekennzeichnet, dass** es sich bei dem ersten Comonomer um Acrylsäure handelt.

3. Thixotropiermittel nach Anspruch 1 oder 2, **dadurch gekennzeichnet, dass** es sich in Formel I bei R¹ um Wasserstoff oder Methyl und bei R² um Methyl handelt.

4. Thixotropiermittel nach einem der Ansprüche 1 bis 3, **dadurch gekennzeichnet, dass** das Ethylencopolymerwachs aus
90 bis 99 Gew.-% Ethylen und 10 bis 1 Gew.-% mindestens zweier Comonomere aufgebaut ist, von denen
30 bis 70 Gew.-% mindestens einer C₃-C₁₂-Alkencarbonsäure als erstes Comonomer und
70 bis 30 Gew.-% mindestens eines Esters der allgemeinen Formel I als zweites Comonomer der allgemeinen Formel I gewählt werden.

5. Verfahren zur Herstellung von Thixotropiermitteln nach einem der Ansprüche 1 bis 4, **dadurch gekennzeichnet, dass** man das Ethylenterpolymerwachs zunächst in einem oder mehreren mit dem Ethylenterpolymerwachs verträglichen Lösemittel löst und anschließend mindestens ein mit dem Ethylenterpolymerwachs unverträgliches Lösemittel zugibt.

6. Lacke, enthaltend mindestens ein Thixotropiermittel.nach einem der Ansprüche 1 bis 5.

7. Metalliclacke, enthaltend mindestens ein Thixotropiermittel nach einem der Ansprüche 1 bis 5.

8. Verfahren zur Herstellung von Lacken oder Metalliclacken durch Vermischen der Thixotropiermittel nach einem der Ansprüche 1 bis 5.

9. Oberflächen, beschichtet mit Lacken oder Metalliclacken, enthaltend mindestens ein Thixotropiermittel nach einem der Ansprüche 1 bis 5.

## Claims

1. A thixotropic agent comprising, as components,
from 0.1 to 30% by weight of at least one ethylene terpolymer wax which is formed from
from 80 to 99.9% by weight of ethylene,
from 0.1 to 20% by weight of at least two comonomers of which,
as the first comonomer, from 1 to 99% by weight of at least one C₃-C₁₂-alkenecarboxylic acid and,
as the second comonomer, from 99 to 1% by weight of at least one ester of the general formula I 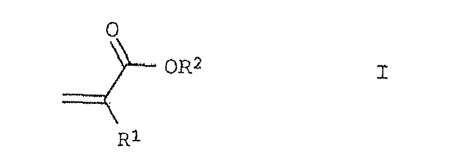 where R¹ is selected from hydrogen, C₁-C₁₀-alkyl, C₃-C₁₂-cycloalkyl or C₆-C₁₄-aryl,
and R² is selected from C₁-C₁₀-alkyl, C₃-C₁₂-cycloalkyl or C₆-C₁₄-aryl,
from 5 to 70% by weight of at least one solvent which is incompatible with the ethylene terpolymer wax, and
from 5 to 85% by weight of at least one solvent which is compatible with the ethylene terpolymer wax and with the former solvent(s).

2. The thixotropic agent according to claim 1, wherein the first comonomer is acrylic acid.

3. The thixotropic agent according to claim 1 or 2, wherein R¹ in formula I is hydrogen or methyl and R² is methyl.

4. The thixotropic agent according to any of claims 1 to 3, wherein the ethylene copolymer wax is formed from
from 90 to 99% by weight of ethylene and from 10 to 1% by weight of at least two comonomers, of which
from 30 to 70% by weight of at least one C₃-C₁₂-alkenecarboxylic acid is selected as the first comonomer and
from 70 to 30% by weight of at least one ester of the general formula I is selected as the second comonomer of the general formula I.

5. A process for preparing thixotropic agents according to any of claims 1 to 4, wherein the ethylene terpolymer wax is first dissolved in one or more solvents compatible with the ethylene terpolymer wax and then at least one solvent incompatible with the ethylene terpolymer wax is added.

6. A coating composition comprising at least one thixotropic agent according to any of claims 1 to 5.

7. A metallic coating composition comprising at least one thixotropic agent according to any of claims 1 to 5.

8. A process for preparing coating compositions or metallic coating compositions by mixing the thixotropic agents according to any of claims 1 to 5.

9. A surface coated with coating compositions or metallic coating compositions comprising at least one thixotropic agent according to any of claims 1 to 5.

## Revendications

1. Agent thixotrope, contenant comme composants :
- 0,1 à 30% en poids d'au moins une cire de terpolymère d'éthylène qui est constituée de :
- 80 à 99,9% en poids d'éthylène,
- 0,1 à 20% en poids d'au moins deux comonomères parmi lesquels :
le premier comonomère est représenté par une quantité de 1 à 99% en poids d'au moins un acide alcènecarboxylique en C₃-C₁₂, et
le second comonomère est représenté par une quantité de 99 à 1% en poids d'au moins un ester de formule générale I 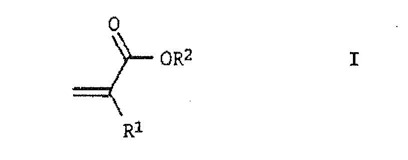 dans laquelle :
R¹ est choisi parmi l'hydrogène, un groupement alkyle en C₁-C₁₀, cycloalkyle en C₃-C₁₂ ou aryle en C₆-C₁₄, et
R² est choisi parmi un groupement alkyle en C₁-C₁₀, cycloalkyle en C₃-C₁₂ ou aryle en C₆-Cₗ₄,
- 5 à 70% en poids d'au moins un solvant qui est incompatible avec la cire de terpolymère d'éthylène, et
- 5 à 85% en poids d'au moins un solvant qui est compatible avec la cire de terpolymère d'éthylène et avec le ou les solvants cités en premier.

2. Agent thixotrope selon la revendication 1, **caractérisé en ce que** le premier comonomère est l'acide acrylique.

3. Agent thixotrope selon la revendication 1 ou 2, **caractérisé en ce que**, dans la formule I, R¹ représente l'hydrogène ou un méthyle et R² représente un méthyle.

4. Agent thixotrope selon l'une quelconque des revendications 1 à 3, **caractérisé en ce que** la cire de copolymère d'éthylène est constituée :
- de 90 à 99% en poids d'éthylène et de 10 à 1% en poids d'au moins deux comonomères, parmi lesquels on choisit :
30 à 70% en poids d'au moins un acide alcènecarboxylique en C₃-C₁₂ comme premier comonomère, et
70 à 30% en poids d'au moins un ester de formule générale I comme second comonomère de formule générale I.

5. Procédé de fabrication d'agents thixotropes selon l'une quelconque des revendications 1 à 4, **caractérisé en ce que** l'on dissout d'abord la cire de terpolymère d'éthylène dans un ou plusieurs solvants compatibles avec la cire de terpolymère d'éthylène et **en ce que** l'on ajoute ensuite au moins un solvant incompatible avec la cire de terpolymère d'éthylène.

6. Vernis contenant au moins un agent thixotrope selon l'une quelconque des revendications 1 à 5.

7. Vernis métalliques contenant au moins un agent thixotrope selon l'une quelconque des revendications 1 à 5.

8. Procédé de fabrication de vernis ou de vernis métalliques par mélange des agents thixotropes selon l'une quelconque des revendications 1 à 5.

9. Surfaces revêtues de vernis ou de vernis métalliques contenant au moins un agent thixotrope selon l'une quelconque des revendications 1 à 5.
